# EUROPÄISCHE PATENTANMELDUNG

(11) **EP 2 239 163 A1**
(43) Veröffentlichungstag der Anmeldung: **13.10.2010**
(21) Anmeldenummer: 10001242.6
(22) Anmeldetag: 06.02.2010
(51) Int. Cl.: B60Q 1/00, F21V 31/03

(54) **Beleuchtungseinrichtung für ein Kraftfahrzeug**

(30) Priorität: 11.04.2009 DE 102009017728
(71) Anmelder: Automotive Lighting Reutlingen GmbH, 72762 Reutlingen (DE)
(72) Erfinder: Hasselberger, Andrea, 72764 Reutlingen (DE)
(74) Vertreter: Wörz, Volker Alfred

(57) **Zusammenfassung**

Die vorliegende Erfindung betrifft eine Beleuchtungseinrichtung (10) für ein Kraftfahrzeug. Sie umfasst ein Gehäuse (12) mit einer durch eine lichtdurchlässige Abdeckscheibe (16) verschlossenen Lichtaustrittsöffnung und mindestens einem in dem Gehäuse (12) angeordneten Lichtmodul. Um Ablagerungen im Inneren der Beleuchtungseinrichtung (10) zu vermeiden, sind erfindungsgemäß im Inneren des Gehäuses (12) Mittel (30) angeordnet, die ein elektrostatisches Feld erzeugen, durch das die Ablagerungen hervorrufenden Schmutzpartikel oder sonstigen Verunreinigungen angezogen werden.

## Beschreibung

Die Erfindung betrifft eine Beleuchtungseinrichtung für ein Kraftfahrzeug. Sie umfasst ein Gehäuse mit einer durch eine lichtdurchlässige Abdeckscheibe verschlossenen Lichtaustrittsöffnung und mindestens ein in dem Gehäuse angeordnetes Lichtmodul.

Aus dem Stand der Technik sind verschiedenartige Beleuchtungseinrichtungen für Kraftfahrzeuge bekannt. So unterscheidet man zunächst zwischen Leuchten und Scheinwerfern. Leuchten werden bevorzugt als Heckbeleuchtung, Blinklicht oder Positionslicht im Heck- und Frontbereich des Fahrzeugs eingesetzt und dienen überwiegend der Verkehrssicherheit in Form von Warn- oder Signalleuchten. Als Lichtquelle weisen Leuchten üblicherweise Glühlampen oder Leuchtdioden (LEDs) auf und arbeiten bevorzugt nach dem Reflexionsprinzip. Sie arbeiten also üblicherweise mit einer Primäroptik, vorzugsweise in Form eines Reflektors, die das Licht der Lichtquelle so reflektiert, dass die austretenden Lichtstrahlen in Lichtaustrittsrichtung des Reflektors die gewünschte Lichtverteilung erzeugen. Bei Leuchten ist besonders eine homogene und auffällige Lichtverteilung gewünscht. Die Abdeckscheibe kann dabei - je nach der gewünschten Funktion der Leuchte - mit oder ohne optische wirksamen Elemente bzw. mit oder ohne Einfärbung ausgebildet sein.

Scheinwerfer sind ausschließlich im Frontbereich eines Fahrzeugs angeordnet. Sie dienen neben der Verkehrssicherheit durch eine Sichtbarmachung des Fahrzeugs für andere Verkehrsteilnehmer insbesondere der Ausleuchtung der Fahrbahn vor dem Fahrzeug, um die Sicht für den Fahrer zu verbessern. Scheinwerfer können als Lichtquelle mindestens eine Glühlampe, Gasentladungslampe oder Leuchtdiode aufweisen. Sie arbeiten nach dem Reflexionsprinzip oder dem Projektionsprinzip. Beim Projektionsprinzip bündelt die Primäroptik in Form eines Reflektors oder einer Vorsatzoptik die von der Lichtquelle ausgesandte Strahlung, und die gebündelte Strahlung wird zur Erzeugung einer gewünschten Lichtverteilung durch eine Sekundäroptik, vorzugsweise in Form einer Projektionslinse, auf die Fahrbahn vor das Fahrzeug projiziert. Zur Erzeugung einer horizontalen Hell-Dunkel-Grenze der Lichtverteilung, bspw. für Abblendlicht oder Nebellicht, kann im Strahlengang zwischen Primär- und Sekundäroptik eine Blendenanordnung angeordnet sein, deren Oberkante als Hell-Dunkel-Grenze auf die Fahrbahn projiziert wird. Die Abdeckscheibe kann mit oder ohne optisch wirksame Elemente versehen sein. Bevorzugte Lichtfunktionen des Scheinwerfers sind Abblendlicht, Fernlicht, Nebellicht, statisches oder dynamisches Kurvenlicht, Autobahnlicht, Landstraßenlicht, Stadtlicht oder ein sogenanntes Teilfernlicht, bei dem Bereiche des Fernlichts, wo sich entgegenkommende oder vorausfahrende Verkehrsteilnehmer befinden, ausgeblendet werden.

Eine als Vorsatzoptik ausgebildete Primäroptik wird insbesondere bei der Verwendung von Leuchtdioden (LEDs) als Lichtquellen eingesetzt. Dabei wird die von den LEDs ausgesandte Strahlung mittels Totalreflexion gebündelt.

Bei allen bekannten Beleuchtungseinrichtungen können in dem Gehäuse mehrere Lichtmodule integriert sein, die jeweils nach dem Reflexions- oder dem Projektionsprinzip arbeiten können. Die Lichtmodule können zur Realisierung unterschiedlicher Lichtfunktionen vorgesehen sein. Es ist aber auch denkbar, dass eine bestimmte Lichtfunktion durch das Zusammenwirken mehrerer Lichtmodule realisiert wird. Das Gehäuse weist üblicherweise für einen Luftaustausch Belüftungsöffnungen auf, so dass sich an der Innenseite der Abdeckscheibe absetzende Feuchtigkeit abtransportiert werden kann und ein Beschlagen der Abdeckscheibe von innen verhindert wird. Die Belüftungsöffnungen sind bei Scheinwerfern vorzugsweise derart angeordnet, dass durch den Fahrtwind über eine erste Öffnung Luft in den Innenraum des Gehäuses eintreten und über eine zweite Öffnung aus dem Gehäuse wieder austreten kann. Dabei sind die Belüftungsöffnungen vorzugsweise als eine Tülle ausgebildet.

Die Belüftungsöffnungen dienen außerdem zu einem Luftdruckausgleich, damit der Luftdruck im Gehäuse nach einem Aufheizen bei eingeschalteter Beleuchtungseinrichtung und anschließendem Abschalten der Beleuchtungseinrichtung ausgeglichen wird. Über die Luftzirkulationsöffnungen und durch Kapillarkanäle im Gehäuse können Staub, Aerosole, Tröpfchen und sonstige Schmutzpartikel in den Innenraum des Gehäuses gelangen. Ferner kann bei einem Öffnen des Gehäuses, bspw. zum Auswechseln der Lichtquelle, Schmutz in den Innenraum des Gehäuses gelangen.

Das Gehäuse ist vorzugsweise aus Kunststoff hergestellt. Dieser Kunststoff oder andere in der Beleuchtungseinrichtung verbaute Kunststoffe können, insbesondere durch die erzeugte Wärme bei eingeschalteter Beleuchtungseinrichtung, mit der Zeit ausgasen und ablagerungsfähige Ausgasprodukte bilden, die ebenfalls Verunreinigungen im Innern des Gehäuses darstellen. Die Ausgasprodukte sind überwiegend gasförmig, können aber auch flüssig sein.

Die bekannten Beleuchtungseinrichtungen haben alle den Nachteil, dass sich Schmutz, Verunreinigungen und die Ausgasprodukte an den Innenwänden des Gehäuses, insbesondere an der Innenseite der Abdeckscheibe und an sichtbaren Flächen des Reflektors ablagern. Das beeinflusst die Funktion der Beleuchtungseinrichtung nachteilig, da das am verschmutzten Reflektor reflektierte bzw. durch die verschmutzte Abdeckscheibe hindurchtretende Licht gedämpft und/oder gestreut wird. Im Inneren der Beleuchtungseinrichtung setzt sich im Laufe der Zeit ein Belag ab, was außer zu funktionalen auch zu optischen Beeinträchtigungen bis hin zu Kundenreklamationen führen kann. Um zu verhindern, dass Verunreinigungen von außen durch die Belüftungsöffnungen in das Gehäuse eindringen können, sind in bekannten Vorrichtungen zwar teilweise Membrane oder Luftfilter an den Belüftungsöffnungen vorgesehen. Die Membrane und die Luftfilter beeinflussen jedoch sehr nachteilig ein Betauungsverhalten der Beleuchtungseinrichtung, da ein Luftaustausch zwischen dem Inneren des Gehäuses und der Außenwelt durch die Membrane und/oder Filter stark eingeschränkt ist. Außerdem können Membrane und Filter das Eindringen von Verunreinigungen ins Innere der Beleuchtungseinrichtung beim Öffnen des Gehäuses nicht verhindern.

Aufgabe der vorliegenden Erfindung ist es, eine Beleuchtungseinrichtung der eingangs genannten Art dahingehend auszugestalten und weiterzubilden, dass die Belagsbildung im Inneren der Beleuchtungseinrichtung, insbesondere auf der Innenseite der Abdeckscheibe, möglichst effektiv und preisgünstig vermieden wird.

Diese Aufgabe wird erfindungsgemäß dadurch gelöst, dass im Inneren des Gehäuses Mittel angeordnet sind, die ein elektrostatisches Feld erzeugen. Elektrostatische Felder existieren in einer nichtleitenden Umgebung ruhender Ladungen. Das bedeutet, ein elektrostatisches Feld ist immer permanent und zeitlich unveränderlich, es fließt kein Strom und es ist wirbelfrei. Im elektrostatischen Feld ist eine elektrische Ladung gespeichert, von der eine potentielle Energie und damit eine Kraft ausgeht. Die Kraft ist dabei proportional der Ladung. Ein Objekt im elektrostatischen Feld wird durch Influenz (auch elektrostatische Induktion genannt) zu einem elektrischen Dipol polarisiert. Bei einem elektrisch leitenden Objekt entfernen sich positive von negativen Ladungen innerhalb des Objekts, bei einem Isolator werden lediglich vorhandene Atome oder Moleküle polarisiert. Dies führt dazu, dass das Mittel, von dem das elektrostatische Feld erzeugt wird, den entgegengesetzten Pol des polarisierten Objekts durch die gespeicherte potentielle Energie anzieht.

Erfindungsgemäß werden also Schmutzpartikel und sonstige Verunreinigungen, die im Gehäuse in den Einflussbereich des elektrostatischen Feldes gelangen, polarisiert und von dem Mittel, von dem das elektrostatische Feld erzeugt wird, angezogen. Aufgrund der im Inneren der Beleuchtungseinrichtung sowieso vorhandenen Luftzirkulation wird sichergestellt, dass die Schmutzpartikel bzw. Verunreinigungen alle irgend wann einmal in das elektrostatische Feld gelangen. Dadurch können die Schmutzpartikel an einer Position im Gehäuse zusammengeführt werden, wo sie für die eigentliche Lichtfunktion sowie für den optischen Eindruck der Beleuchtungseinrichtung wirkungslos sind. Hierbei wird darauf hingewiesen, dass die Belüftungsöffnung mit samt der Tülle Teil des Gehäuses sind. Insbesondere die Belagsbildung auf der Innenseite der Abdeckscheibe kann dadurch kostengünstig und besonders wirkungsvoll verhindert werden. Die Erfindung eignet sich damit bevorzugt für den Einsatz in Scheinwerfern, um die Ausleuchtung der Fahrbahn beim Fahren vor dem Fahrzeug nicht zu beeinträchtigen.

Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf jeweils explizit hingewiesen wird. Vorteilhafte Weiterbildungen finden sich in den Unteransprüchen.

Vorteilhaft für die Erfindung ist, dass die Mittel mindestens ein passives Element umfassen, welches das elektrostatische Feld erzeugt. Passive Elemente benötigen keine eigene elektrische Versorgung und belasten damit nicht das elektrische Versorgungssystem des Fahrzeugs. Denkbar ist allerdings auch, dass im Bedarfsfall ein aktives Element ein elektrisches Feld erzeugt, das im Bedarfsfall nicht nur ein konstantes, sondern bspw. auch ein pulsierendes Feld erzeugen kann.

Damit bietet sich an, dass die Mittel ein Elektret aufweisen. Ein Elektret ist ein elektrisch isolierendes Material, das im Wesentlichen permanent gespeicherte elektrische Ladungen oder im Wesentlichen permanent ausgerichtete elektrische Dipole enthält und somit ein elektrostatisches Feld in seiner Umgebung und/oder in seinem Inneren erzeugt. Die elektrostatische Feldstärke nimmt mit wachsender Entfernung vom Elektret ab. Der Name Elektret verdeutlicht, dass das Elektret als elektrostatisches Analogon zu einem Permanentmagneten aufgefasst werden kann. Elektrete werden meist aus Polymeren (z.B. Polytetrafluorethylen, Polytetrafluorethylenpropylen, Polypropylen, Polyethylenterephthalat, Polyvinylidenfluorid und einigen seiner Copolymere) hergestellt, teilweise aber auch aus anorganischen Dielektrika, wie Siliziumdioxid oder Siliziumnitrid. Alle genannten Stoffe sind vorteilhafterweise preisgünstig zu beziehen und problemlos zu verarbeiten. Das Elektret kann bspw. so hergestellt werden, dass ein Kunststoff bei der Herstellung in heißem, flüssigen Zustand mit einem starken elektrischen Dipolmoment ausgerichtet wird, wobei vorhandene positive und negative Ladungen getrennt werden. Nach einer Erstarrung der erkaltenden Mischung ist die Beweglichkeit der Moleküle stark eingeschränkt, die Ausrichtung der Dipole bleibt erhalten. Anschließend kann das so gewonnene Elektret durch eine metallische Schutzschicht versiegelt werden, um die Stabilität des elektromagnetischen Feldes sicherzustellen.

Da das Gehäuse der Beleuchtungseinrichtung in der Regel Belüftungsöffnungen aufweist, ist es sinnvoll, die Mittel im Bereich der Öffnung anzuordnen. Über diese Öffnungen, die Teil des Gehäuses sind, findet der überwiegende Luftaustausch zwischen dem Inneren des Gehäuses und der Außenwelt statt, wobei Staub und andere Verunreinigungen ins Innere des Gehäuses gelangen können. Durch die Positionierung des elektrostatischen Feldes im Bereich der Lufteintrittsöffnung werden die Verunreinigungen bzw. Staubpartikel in der Luft beim Eintritt in das Gehäuse durch das elektrostatische Feld abgelenkt und auf den Mitteln mit dem elektrostatischen Feld abgelagert. Dabei ist das Elektret bevorzugt an Stellen mit starker Luftbewegung anzuordnen. Die Mittel können von einem Abdeckrahmen der Beleuchtungseinrichtung verdeckt sein, so dass das Design der Beleuchtungseinrichtung bei einem Blick von außerhalb durch die Abdeckscheibe ins Innere der Beleuchtungseinrichtung durch die Erfindung nicht negativ beeinflusst wird.

Besonders vorteilhaft ist, wenn die Belüftungsöffnung eine Belüftungstülle aufweist und die Mittel an einer Innenseite der Belüftungstülle angeordnet sind. Die Mittel können dabei große Bereiche der Innenseite oder sogar die vollständige Innenwand der Belüftungstülle bedecken. Dabei kann die Belüftungstülle auch einen zwei- oder mehrgeteilten Kanal umfassen. Diese Ausführungsform besteht aus einer zunächst einteiligen Tülle mit einem bevorzugt rechteckigen Querschnitt, in die ein Bauteil mit separaten Stegen eingesetzt ist, von denen mindestens ein Steg aus Elektret besteht und die Stege mit Elektret an gegenüberliegenden Seiten angeordnet sind, um eine günstige Umströmung zu erreichen. Das eingesetzte Bauteil kann derart ausgestaltet sein, dass die verschmutzten Elektretstege aus der Tülle entnommen werden können, um diese zu reinigen bzw. auszuwechseln. Damit ist das elektrostatische Feld direkt im Lufteinlass angeordnet, wodurch ein Schutz von Verunreinigungen (Wirkung als "Staubfänger") im Gehäuse besonders effektiv ist. Ein Betauungsverhalten der Beleuchtungseinrichtung wird dadurch nicht negativ beeinflusst, da die Belüftungsöffnungen nicht abgedeckt und nur unwesentlich verengt sind. Außerdem ist die Lösung durch geringe Material- und Installationskosten sehr preisgünstig.

Selbstverständlich ist auch möglich, dass die Mittel an einer Innenseite des Gehäuses angeordnet sind. Besonders geeignete Positionen sind Bereiche im Innern des Gehäuses nahe der Lufteinlassöffnung. Diese Position kann abseits der Abdeckscheibe liegen, so dass die Mittel von außen nicht sichtbar sind und/oder von einem Abdeckrahmen der Beleuchtungseinrichtung verdeckt sein. Das Design der Beleuchtungseinrichtung und auch das Betauungsverhalten wird auch hier durch die Erfindung nicht negativ beeinflusst. Auch diese Weiterbildung ist durch geringe Material-, Herstellungs- und Montagekosten sehr preisgünstig und beseitigt bevorzugt Schmutzpartikel, die auf beliebige Weise, bspw. über die Belüftungsöffnungen, in den Innenraum des Gehäuses gelangen.

Möglich ist auch, dass die Mittel eine luft- und feuchtigkeitsdurchlässige Gitterstruktur, vorzugsweise ein Gewebe, aufweisen. Die Gitterstruktur kann dabei im Querschnitt der Belüftungstülle, vorzugsweise der Lufteintrittsöffnung, des Gehäuses angeordnet sein und für Luft, die mit Verunreinigungspartikeln angereichert ist, als "Staubfänger" dienen. Andererseits ist die Gitterstruktur so durchlässig, dass Luft nahezu ungehindert hindurchtreten kann. Die Lüftungseigenschaften des Gehäuses und die Betauungseigenschaften der Abdeckscheibe werden dadurch nicht beeinträchtigt.

Natürlich ist auch möglich, dass in der Belüftungsöffnung ein Filterelement angeordnet ist, das die Mittel aufweist. Das bedeutet, dass die Mittel mit dem elektrostatischen Feld mit einem herkömmlichen Filter zusammenwirken können. So kann bspw. das erfindungsgemäße Mittel Staubpartikel oder andere Verunreinigungen aus dem eintretenden Luftstrom herausfiltern. Eine solche Anordnung könnte in Lufteintrittsrichtung vor oder hinter der Belüftungsöffnung angeordnet sein.

### Kurzbeschreibung der Figuren

Nachfolgend werden anhand der Figuren bevorzugte Ausführungsbeispiele der Erfindung beispielhaft erläutert.
Es zeigen:
- Figur 1: eine schematische Darstellung eines erfindungsgemäßen Scheinwerfers, der nach dem Reflexionsprinzip arbeitet;
- Figur 2: eine schematische Darstellung eines erfindungsgemäßen Scheinwerfers, der nach dem Projektionsprinzip arbeitet;
- Figur 3: eine vergrößerte Darstellung einer Belüftungstülle eines Scheinwerfers aus Figur 1 oder 2 in einer ersten Ausführungsform; und
- Figur 4: eine vergrößerte Darstellung einer Belüftungstülle eines Scheinwerfers aus Figur 1 oder 2 in einer zweiten Ausführungsform.

### Detaillierte Beschreibung

In der nachfolgenden Beschreibung wird die Erfindung an Hand eines Scheinwerfers 10 in mehreren Ausführungsformen beschrieben. Der hier beispielhaft beschriebene Scheinwerfer 10 weist jeweils nur ein Lichtmodul zum Erzeugen von Fern- und Abblendlicht auf. Er kann jedoch auch mehrere oder andere Lichtmodule enthalten.

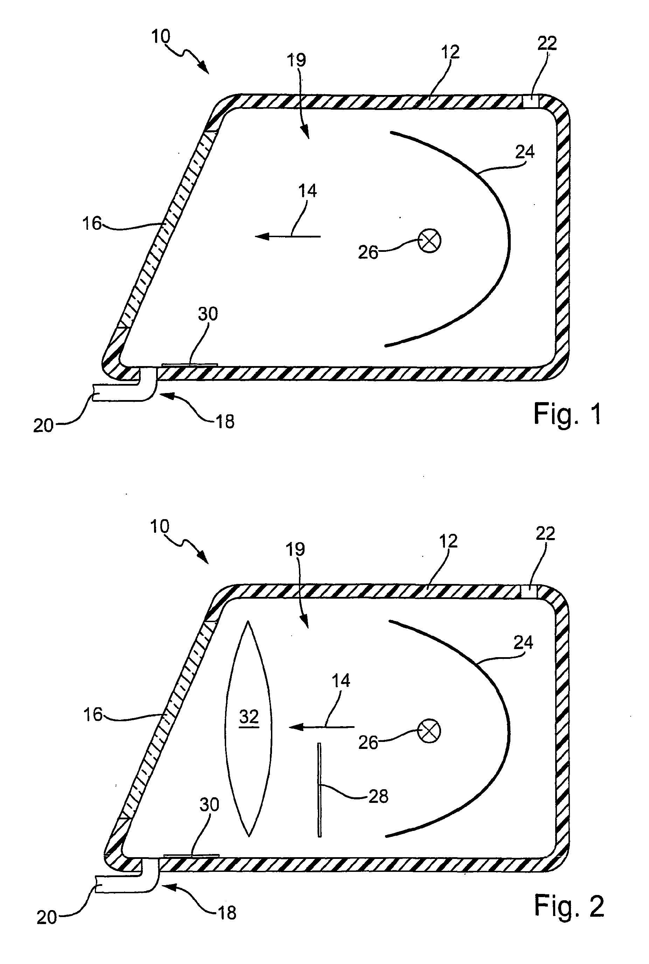

Figur 1 zeigt den Scheinwerfer 10, der nach einem Reflexionssystem arbeitet. Dazu weist der Scheinwerfer 10 ein Gehäuse 12 auf, das in Lichtaustrittsrichtung 14 mit einer lichtdurchlässigen Abdeckscheibe 16 verschlossen ist. Das Gehäuse 12 ist aus Kunststoff hergestellt und weist in Figur 1 an der Unterseite eine rüsselförmige Belüftungstülle 18 auf, die einen Lufteinlass für eine Luftzirkulation im Innenraum 19 des Gehäuses 12 darstellt. Die Lüftungstülle 18 weist eine Eingangsöffnung 20 auf wobei die Eingangsöffnung 20 in Lichtaustrittsrichtung 14 ausgerichtet ist. Die Lichtaustrittsrichtung ist üblicherweise mit einer Fahrrichtung eines Fahrzeugs identisch. In Figur 1 an der oberen Seite des Gehäuses 12 ist im hinteren Bereich eine zweite Öffnung 22 im Gehäuse 12 vorgesehen. Sie dient als Luftaustrittsöffnung.

Im Innern des Gehäuses 12 ist ein Reflektor 24 angeordnet, in dessen Brennpunkt eine Lichtquelle 26 vorgesehen ist. Dabei kann die Lichtquelle 26 eine Lampe, z.B. eine Gasentladungslampe sein, sie kann auch eine Leuchtdiode (LED) oder eine Anordnung von mehreren Leuchtdioden (LED-Array) sein. Eine Lichtverteilung vor dem Fahrzeug auf der Fahrbahn wird im Wesentlichen durch die Form und Ausgestaltung des Reflektors 24 bestimmt. Optische wirksame Elemente in der Abdeckscheibe 16 können den Strahlengang des Lichts allerdings noch beeinflussen, indem sie das Licht streuen oder ablenken. Beim Fahren des Fahrzeugs wird durch den Fahrtwind ein Luftdruck vor der Belüftungsöffnung 18 aufgebaut, der ohne zusätzliche Hilfsmittel die Luft über die Öffnung 20 in den Innenraum 19 strömen lässt. Die eingeströmte Luft zirkuliert im Gehäuseinnenraum 19 und entweicht über die Luftaustrittsöffnung 22.

Weiterhin ist in Figur 1 an der Unterseite im Innenraum 19 des Gehäuses 12 in der Nähe der Belüftungstülle 18 ein flächenförmig ausgestaltetes Element 30 angeordnet, das aus Elektret hergestellt ist. Elektret ist ein elektrisch isolierendes Material, das im Wesentlichen permanent ausgerichtete elektrische Dipole enthält und somit ohne eine elektrische Versorgungsspannung ein elektrostatisches Feld in seiner Umgebung und in seinem Inneren erzeugt. Die elektrostatische Feldstärke nimmt mit wachsender Entfernung vom Elektret ab. Dabei stellt das Eleketet in der Regel ein passives Element dar, es kann aber auch ein aktives Element sein.

Figur 2 zeigt den Scheinwerfer 10, der nach einem Projektionsprinzip arbeitet. Dabei gilt, dass solche Elemente und Bereiche, welche funktionsäquivalent sind zu Elementen und Bereichen des Scheinwerfers von Figur 1, die gleichen Bezugszeichen tragen und nicht nochmals erläutert werden. Der wesentliche Unterschied zu dem Scheinwerfer 10 aus Figur 1 ist der, dass das von dem Reflektor 24 gebündelte Licht durch eine Projektionslinse 32 auf die Fahrbahn vor das Fahrzeug projiziert wird. Zwischen dem Reflektor 24 und der Projektionslinse 32 kann eine Blendenanordnung 28 angeordnet sein, deren Oberkante zur Erzeugung einer Hell-Dunkel-Grenze der Lichtverteilung auf die Fahrbahn vor das Fahrzeug projiziert wird. Der Scheinwerfer 10 aus Figur 2 wird auch als sog. PES-Scheinwerfer (Poly-Ellipsoid-Scheinwerfer) bezeichnet. Dabei hat der Reflektor 24 vorzugsweise die Form eines Rotationsellipsoids oder eine davon abweichende ellipsoidähnliche Freiform, um die von der Lichtquelle 26 ausgesandten Lichtstrahlen zu bündeln bevor das Licht durch die Projektionslinse 32 die entgültige Lichtverteilung vor dem Fahrzeug auf der Fahrbahn erzeugt.

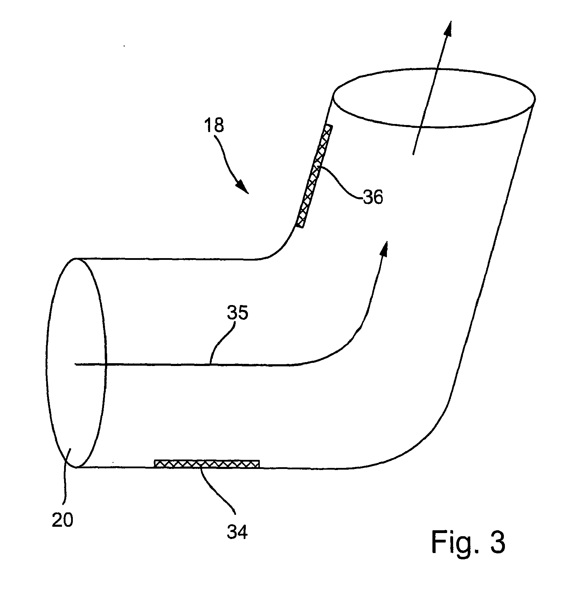

Figur 3 zeigt die Belüftungstülle 18 in einer Großdarstellung und in einer ersten Ausgestaltungsform. Dabei weist die Innenwand der Belüftungstülle 18 im Bereich der Lufteinlassöffnung 20 ein flächenförmig ausgestaltetes Elektretelement 34 auf. Weiterhin ist an der Innenwand der Belüftungstülle 18 in Luftdurchflussrichtung 35 im weiteren Verlauf ein weiteres Elektretelement 36 angeordnet. Die Elektretelemente 34 und 36 könnten auch den gesamten Innenumfang der Belüftungstülle 18 umschließen oder es kann sogar die gesamte Belüftungstülle aus Eleketetmaterial bestehen (nicht dargestellt).

In einer nicht dargestellten Ausführungsform kann die Belüftungstülle auch einen zwei- oder mehrgeteilten Kanal umfassen. Dabei besteht die Belüftungstülle aus einer zunächst einteiligen Tülle mit einem bevorzugt rechteckigen Querschnitt, in die ein Bauteil mit separaten Stegen eingesetzt ist, von denen mindestens ein Steg aus Elektret besteht und die Stege mit Elektret.an gegenüberliegenden Seiten angeordnet sind, um eine günstige Umströmung zu erreichen. Das eingesetzte Bauteil kann derart ausgestaltet sein ,dass die verschmutzten Elektretstege aus der Tülle entnommen werden können, um diese zu reinigen bzw. auszuwechseln.

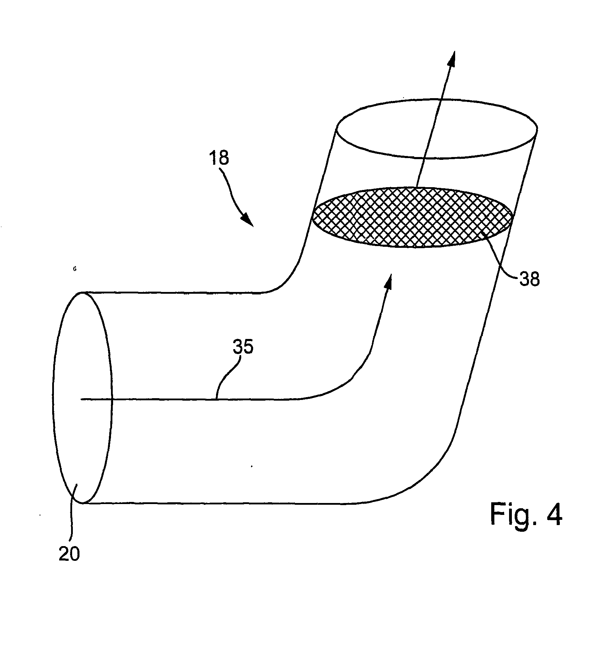

Figur 4 zeigt die Belüftungstülle 18 in einer Großdarstellung und in einer zweiten Ausgestaltungsform. Dabei weist die Belüftungstülle 18 im Querschnitt eine radial angeordnete luft- und feuchtigkeitsdurchlässige Gitterstruktur 38 auf. Die Gitterstruktur 38 ist aus Elektretmaterial hergestellt.

Bei dem Scheinwerfer 10 kann im Laufe der Zeit ein ungewollter Belag im Gehäuseinnenraum 19, insbesondere an der Abdeckscheibe 16 auftreten. Der Belag verändert dabei die optischen Eigenschaften des Scheinwerfers 10. Der Belag entsteht im Wesentlichen durch Schmutzpartikel, die im Laufe der Zeit durch die Belüftungsöffnung 18 in das Gehäuse 12 eindringen und sich an den Innenwänden des Gehäuses 12 absetzen. Der Schmutzbelag kann aber auch durch Ausgasprodukte von Kunststoff entstehen, da das Gehäuse 12 aus Kunststoff hergestellt ist und meist noch andere Kunststoffe im Gehäuse 12 verbaut sind. Auch bei einem Auswechseln der Lichtquelle 26 kann Schmutz in den Innenraum 19 des Gehäuses 12 gelangen. Die Erfindung verhindert das ungewollte Ablagern des Schmutzbelags, insbesondere an der Abdeckscheibe 16 durch den Einsatz von Elektreten als Staub- und Schmutzfänger im Gehäuseinnenraum 19.

### Die gewünschte Wirkung der Elektrete wird folgendermaßen erzielt:

Elektrete erzeugen ein elektrostatisches Feld in ihrer Umgebung. Im elektrostatischen Feld ist eine elektrische Ladung gespeichert, von der eine potentielle Energie und damit eine Kraft ausgeht. Die Elemente mit dem Elektret 30, 34, 36 und/oder 38 sind vorzugsweise an Orten im Gehäuse 12 positioniert, an denen bevorzugt verschmutze Luft vorbeiströmen kann. Dies sind besonders die Belüftungstüllen 18. Ein Staubpartikel in der verschmutzten Luft wird im elektrostatischen Feld der Elektrete durch Influenz (auch elektrostatische Induktion genannt) zu einem elektrischen Dipol polarisiert. Das bedeutet, dass bei einem elektrisch leitenden Staubpartikel sich positive und negativen Ladungen innerhalb des Staubpartikels voneinander entfernen, bei einem nichtleitenden (isolierenden) Staubpartikel werden lediglich vorhandene Atome oder Moleküle polarisiert. Dies führt in jedem Fall dazu, dass das Element mit dem Elektret 30, 34, 36 und/oder 38 den entgegengesetzten Pol des polarisierten Staubpartikels anzieht, also den Staubpartikel aus der vorbeiströmenden Luft herausfiltert und an dem Element 30, 34, 36 und/oder 38 anlagert. Die Luft, die anschließend an der Abdeckscheibe 16 im Gehäuseinnenraum 19 vorbeiströmt ist somit von Schmutzpartikeln gereinigt, es kann keine sonstige Ablagerung mehr stattfinden.

## Patentansprüche

1. Beleuchtungseinrichtung (10) für ein Kraftfahrzeug, umfassend ein Gehäuse (12) mit einer durch eine lichtdurchlässigen Abdeckscheibe (16) verschlossenen Lichtaustrittsöffnung, und mindestens einem in dem Gehäuse (12) angeordneten Lichtmodul, **dadurch gekennzeichnet, dass** im Inneren des Gehäuses (12) Mittel (30; 34; 36; 38) angeordnet sind, die ein elektrostatisches Feld erzeugen.

2. Beleuchtungseinrichtung (10) nach Anspruch 1, **dadurch gekennzeichnet, dass** die Mittel (30; 34; 36; 38) mindestens ein passives Element umfassen, welches das elektrostatische Feld erzeugt.

3. Beleuchtungseinrichtung (10) nach Anspruch 1 oder 2, **dadurch gekennzeichnet, dass** die Mittel (30; 34; 36; 38) mindestens ein aktives Element umfassen, welches das elektrostatische Feld erzeugt.

4. Beleuchtungseinrichtung (10) nach einem der vorhergenannten Ansprüche, **dadurch gekennzeichnet, dass** das Gehäuse (12) eine Belüftungsöffnung (18) aufweist und die Mittel (30; 34; 36; 38) im Bereich der Öffnung (18) angeordnet sind.

5. Beleuchtungseinrichtung (10) nach Anspruch 4, dass die Belüftungsöffnung (18) eine Belüftungstülle aufweist und die Mittel (34; 36) an einer Innenseite der Belüftungstülle angeordnet sind.

6. Beleuchtungseinrichtung (10) nach Anspruch 4, dass die Belüftungsöffnung (18) eine Belüftungstülle aufweist und die Belüftungstülle selbst aus Mitteln besteht, die ein elektrostatisches Feld erzeugen.

7. Beleuchtungseinrichtung (10) nach einem der vorhergenannten Ansprüche, **dadurch gekennzeichnet, dass** die Mittel (30) an einer Innenseite des Gehäuses (12) angeordnet sind.

8. Beleuchtungseinrichtung (10) nach einem der vorhergenannten Ansprüche, **dadurch gekennzeichnet, dass** die Mittel (38) eine luft- und feuchtigkeitsdurchlässige Gitterstruktur, vorzugsweise ein Gewebe, aufweisen.

9. Beleuchtungseinrichtung (10) nach einem der Ansprüche 3 bis 6, **dadurch gekennzeichnet, dass** in der Belüftungsöffnung (18) ein Filterelement angeordnet ist, das die Mittel aufweist.

10. Beleuchtungseinrichtung (10) nach einem der vorhergenannten Ansprüche, **dadurch gekennzeichnet, dass** die Mittel (30; 34; 36; 38) ein Elektret aufweisen.
